(19) Europäisches Patentamt

European Patent Office

Office européen des brevets

(11) **EP 0 362 253 B1**

## (12) EUROPEAN PATENT SPECIFICATION

(45) Date of publication and mention
of the grant of the patent:
**03.12.1997 Bulletin 1997/49**

(21) Application number: **88904585.2**

(22) Date of filing: **26.05.1988**

(51) Int Cl.6: **C21C 5/52**, C22B 4/00,
H05B 7/00

(86) International application number:
**PCT/GB88/00417**

(87) International publication number:
**WO 88/09388 (01.12.1988 Gazette 1988/26)**

(54) **PROCESS FOR TREATING LIQUID METALS**

VERFAHREN ZUR BEHANDLUNG VON FLÜSSIGEN METALLEN

PROCEDE DE TRAITEMENT DE METAUX LIQUIDES

(84) Designated Contracting States:
**AT BE DE FR GB IT LU NL SE**

(30) Priority: **26.05.1987 US 54341**

(43) Date of publication of application:
**11.04.1990 Bulletin 1990/15**

(73) Proprietors:
- **THE UNIVERSITY OF TORONTO INNOVATIONS FOUNDATION**
  **Toronto, Ontario M5T 1P9 (CA)**
- **SOMMERVILLE, Iain David**
  **Ontario, L6L 1P5 (CA)**

(72) Inventors:
- **KEMENY, Francis, Louis**
  **Toronto Ontario, M4Y 1R5 (CA)**

- **SOMMERVILLE, Iain David**
  **Ontario, L6L 1P5 (CA)**

(74) Representative: **Orr, William McLean**
**URQUHART-DYKES & LORD**
**5th Floor, Tower House**
**Merrion Way**
**Leeds West Yorkshire, LS2 8PA (GB)**

(56) References cited:
FR-A- 370 051           FR-A- 2 528 872
US-A- 3 203 883         US-A- 3 347 766
US-A- 3 671 655

- **Plasma Technology in Metallurgical Processing,**
  **Chapter 8A, p. 89, 99-100, AIME 1987.**

## Description

The present invention relates to processes for treating metals which are in a liquid state and more particularly to electrolytic processes for desulphurizing such metals.

Current trends indicate an increasing demand worldwide for high quality, low residual content metals. In one conventional method, a metal, particularly steel, may be refined in a furnace by providing the metal in a liquid state and adding molten slag thereto. Impurities in the metal are thereby chemically reduced and retained in the molten slag. The amount of impurities removed from the slag and the rate of removal is primarily limited by the amount of slag used and the capacity of the slag for the impurities.

M.G. Frohberg, M.L. Kapoor, and A. Nilas in the article entitled "Review Paper: Desulphurization", J.I.S.I., February 1965, pp. 139-182 suggest using methods such as mechanical stirring and adjustment of the oxygen potential to improve the removal of sulphur from steel.

In the article, "The Kinetics of Sulphur Transfer from Iron to Slag", R.G. Ward and K.A. Salmon, J.I.S.I., December 1960, pp. 393-402, the electrolytic nature of sulphur transfer is discussed. In another article by the same workers, "The Kinetics of Sulphur Transfer from Iron to Slag", J.I.S.I., March 1963, pp. 222-227, the use of electrolytic methods to enhance sulphur removal using a current density below which arcing occurs is investigated. It was concluded that the process was too inefficient to be commercially attractive.

It is known to refine certain metals using solely an electrolytic process. However, a very large amount of electricity must be used which usually renders this process prohibitively expensive for use with metals other than precious metals. Accordingly, it would be desirable to have a process whereby a common or "non-precious" metal could be economically refined using an electrolytic process.

Alloying of liquid metals conventionally requires the separate step of converting the oxides of the alloy to be added into a reduced form of the alloy which can then be added to the liquid metal. In the case of chromium alloys for steel, the chromium oxide must be converted to ferrochromium. This process tends to be very expensive. Accordingly, it would be desirable to have a process whereby the oxides of the alloy could be converted to their reduced form in a relatively simple and economical manner.

It is an object of the present invention to provide a process for desulphurization in a plasma furnace.

The invention is defined in claim 1. Preferred embodiments are defined in claims 2-16.

The present invention may be used to refine or purify a metal while the metal is in a liquid state. Although applicant does not wish to be bound by any particular theory, it is believed that with the present invention, the induced potential creates a higher concentration of negative charge at the liquid metal/ionic melt layer interface than at the ionic melt/plasma phase interface. Thus at the liquid metal/ionic melt layer interface, reduction of impurities in the liquid metal occurs, causing these impurities to migrate into the ionic melt layer and up to the ionic melt/plasma interface. At the interface between the ionic melt layer and the plasma phase, these impurities are generally oxidized to a gaseous form and escape into the surrounding atmosphere. Oxidation of the impurities at the ionic melt layer-plasma phase interface may be enhanced by the addition of suitable compounds to the plasma phase - for example oxygen may be added to enhance the removal of sulphur in the form of sulphur dioxide. Thus, the ionic melt layer acts as a pump to remove impurities from the liquid metal rather than as a reservoir for impurities. Impurities can therefore be substantially completely removed from the liquid metal. The rate of removal is in part limited by the rate of escape of the impurities into the surrounding atmosphere, which is dependent on the current density. Thus, in this embodiment of the invention, a metal may be refined by plasma-enhanced electrolytic reduction of impurities contained in the metal.

Metallic compounds, such as metal oxides, can be alloyed into the liquid metal by being added directly to the ionic melt layer. Again, while not wishing to be bound by any particular theory, applicant believes that the induced potential causes the positive metal ions of the metal compounds to migrate to the ionic melt/liquid metal interface, where they are reduced to their elemental state. The alloying process may be enhanced by addition of suitable compounds to the plasma phase - for example carbon monoxide may be added to the plasma phase to enhance the removal of oxygen in the form of carbon dioxide. This allows relatively common and inexpensive metal compounds to be alloyed into the liquid metal in situ rather than first having to be transformed into a reduced form by a relatively expensive separate process.

Generally, the ionic melt layer should possess a melting point such that it is in a liquid state at the process temperature. Moreover, the ionic melt layer should be sufficiently conductive to allow charge transfer from the liquid metal to the plasma phase upon application of the DC potential.

The present invention thus may be used to enhance the removal of impurities from the metal and enhance alloying by providing favourable migrations of the components towards the various interfaces and by augmenting the desired oxidations and reductions at the interfaces. Moreover, applicant believes that the intense localized heat provided by the plasma phase during process of the present invention acts to accelerate the reaction.

The invention can suitably be used with most metals which can be alloyed or purified by conventional methods. In the case of steel refining, the reactions taking place at the ionic melt/liquid metal interface may include the reduction of impurities in the liquid metal such as:

$$\underline{S} + 2e \rightarrow (S^{2-})$$

$$\underline{O} + 2e \rightarrow (O^{2-})$$

Recovery of metal cations in the ionic melt or slag phase may include the following reactions:

$$(Fe^{2+}) + 2e \rightarrow \underline{Fe}$$

$$(Mn^{2+}) + 2e \rightarrow \underline{Mn}$$

$$(Cr^{3+}) + 3e \rightarrow \underline{Cr}$$

The brackets represent components in the ionic melt layer, while the underlined components are dissolved in the liquid metal layer.

The process of the present invention is preferably used to treat a metal selected from the group comprising steel, iron, copper, titanium, zirconium, hafnium, tantalum, lanthanum, silicon, nickel, and alloys thereof. The invention is most suitable for use with metals having a melting point (at atmospheric pressure) of above about 800°, preferably above about 1100°. It can be used with lower melting metals if a suitable low-melting point ionic melt layer is available for use therewith.

Preferably, The invention can be carried out to remove sulphur from steel, copper, titanium and nickel.

The ionic melt layer used for a given metal is generally of the same composition as the ionic melt layer used in conventional metal refining processes. Generally, it is desirable that the ionic melt layer have a melting point moderately below the process temperature such that the ionic melt layer is capable of being maintained in a molten state while in contact with the liquid metal. Moreover, the ionic melt layer should be sufficiently conductive to allow transfer of charge, but not sufficiently conductive to allow significant electronic conduction. The ionic melt layer is preferably provided in an amount sufficient to completely cover the entire surface of the liquid metal.

An ionic melt layer suitable for use comprises various oxides. Preferably, the ionic melt layer further comprises an amount of a Group VII salt, more preferably a fluoride salt. Generally, it is preferred to use an ionic melt layer comprising oxides which are stable relative to the metal being refined , such as calcium oxide, magnesium oxide and aluminum oxide.

The composition of the ionic melt layer for refining is not as critical in the present invention as in conventional processes, since the capacity of the ionic melt layer for the impurities does not limit the amount of impurities that are removed from the liquid metal. For example, for removal of impurities from steel, a low basicity or acidic slag can be used, which would not be effective in removing sulphur in conventional processes.

The current density in the vicinity of the electrode should be high enough to create a plasma. The current density required depends on several factors and can be readily determined experimentally by one skilled in the art.

The average current density applied should be sufficiently high that the process proceeds at a commercially feasible rate. Generally, standard refining processes are carried out for 5-20 minutes. Thus, the average current density is preferably At least 0.7 amps/cm$^2$. For small scale experimental furnaces, an average current density of 0.7 amps/cm$^2$ is satisfactory, whereas with large scale furnaces, an average current density between 1.0-1.2 amps/cm$^2$ is preferably used. These current densities should generally be regarded as minimums. The higher the current density, the faster the process operates. The upper limit on current density is determined by cost.

The gas used with the electrode to create the plasma phase should be relatively inert with respect to the electrode and should stabilize the arc. Preferably, the gas is argon. In the sealed container, the pressure is preferably just above atmospheric to inhibit seepage of ambient air into the container. When impurities are to be removed from the liquid metal, oxygen may advantageously be added in the vicinity of the plasma as it has been found to enhance removal.

The metal in its liquid state is preferably agitated during the process disclosed herein. The more preferred methods of agitating the liquid metal include i) induction and ii) agitation by bubbling gas through the liquid metal, both of which are known to those skilled in the art.

The process can operate in either batch or continuous mode. When operating in the continuous mode, the ionic melt and plasma phases are preferably contained in a vessel and the liquid metal flows through the vessel underneath.

Preferred batch mode embodiments of the invention will now be described with reference to the following drawings in which:

Figure 1 is a diagrammatic cross-section of a furnace assembly for treating liquid metal;
Figure 2 is a graph of sulphur content of liquid metal versus time for type 304L stainless steel;
Figure 3 is a graph of sulphur content of liquid metal versus time for type 304-4% C stainless steel; and
Figure 4 is a graph of (i) sulphur content of the liquid metal versus time and (ii) sulphur content of the slag versus time.

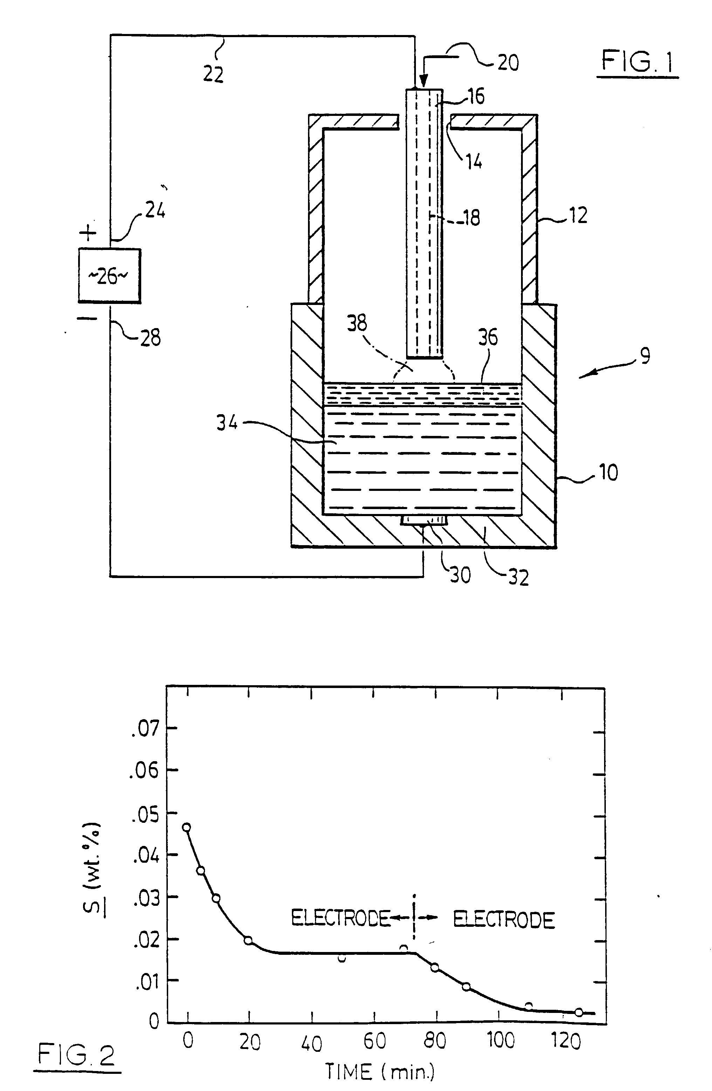

As can be seen in Figure 1, a furnace assembly 9 comprises a container 10 having a roof 12. An opening 14 in the roof 12 is provided to receive an electrode 16 which extends downwardly towards the container 10. This electrode has an axial bore 18 extending through the centre thereof through which plasma-supporting gas can be injected through inlet 20. This electrode is connected by a wire 22 to the positive end 24 of a DC power supply 26. The negative end 28 of the power supply is connected to a cathode 30 at the base 32 of the container 10.

The operation of the apparatus illustrated in the figure is as follows. Liquid metal 34 is introduced into the container 10 and a suitable compound is added thereto to form an ionic melt layer 36 on the surface of the liquid metal. Power is supplied to the system via the DC power supply 26. Gas is passed axially through the electrode 16 to provide a plasma phase 38 above the ionic melt layer 36.

Variations can be made to the preferred embodiment of the apparatus within the scope of the invention as described and claimed. The electrode 16 could be a graphite electrode, a plasma torch or any other type of electrode capable of sustaining an electric arc or plasma. Preferably a graphite electrode of the type disclosed in U.S. Patent 4,037,043, issued July 19, 1977, is used. Alternatively, a plasma torch of the type disclosed in U.S. Patent 3,749,802, issued 1973, may be used. The container 10 can be electrically conducting, so that the cathode 30 is not necessary to complete the circuit. In some circumstances, such as in desulphurization of liquid metal, the off gases should not be allowed to escape into the atmosphere but rather into a gas collection system.

The examples do not form part of the invention.

EXAMPLE 1

A furnace assembly similar to that of Figure 1 was used. The furnace was lined with a 98% MgO ramming compound. The inside diameter of the lined furnace was 11.4 cm and a maximum heat size of 8 kg could be accommodated. A thyristor invertor was used to provide 30 kw of power at a frequency range of about 2500-4000 Hz to an induction coil located on the outside of the container. The furnace roof was water-cooled and constructed of austenitic stainless steel to minimize heating by stray field from the induction coil. A 22 mm diameter graphite electrode was admitted through a hole in the centre of the roof. The electrode was insulated from the supporting structure by a composite sleeve made of refractory paper and high temperature silicon rubber. Clearance between the electrode and the sleeve was about 0.5 mm to allow axial movement of the electrode. The electrode was raised and lowered by a crank and gear arrangement.

A 6 mm axial hole was drilled through the length of the electrode. The top end of the electrode was threaded to accommodate a copper pipe gas inlet. The bottom was drilled out and threaded to allow insertion of a consumable graphite electrode tip. These tips are 100 mm long and 13 mm in diameter, threaded at one end, with a 2 mm diameter hole drilled axially therethrough. The electrode tips were replaced before they wear down to within 10 mm of the electrode end. These small diameter tips create a higher current density and thus better plasma stability.

Plasma-forming gases, such as argon, were injected through the hole in the electrode. The electrode was held by a water-cooled aluminum clamp to which the electrical connection is made. The return pass of the current was via a cathode consisting of a 19 mm stainless steel pin protruding from a water-cooled copper block embedded in a magnesia-chromate plastic refractory at the base of the container.

A 15 cm diameter sealable port in the furnace roof allows observation, alloying, slag addition, sampling and temperature measurement. The furnace roof was mated to the body of the furnace through a sand seal.

A DC power supply was used to provide the plasma energy. The maximum current was 500 A and the open circuit voltage is 75 V. Suitable plasma operation was possible from about 3.5 to 12 kW. The power delivered at a given setting was virtually independent of electrode to slag layer spacing. Rather, the voltage and current vary to compensate for the changes in arc resistance. Thus an increase in the plasma length results in a decreasing current and an increase in voltage with any given power setting.

Arc voltages and currents were continuously monitored during DC plasma operation. Voltage was measured directly across the supply terminal, while current is measured indirectly by voltage drop across a shunt resistor in the supply line.

Desulphurization studies using the above apparatus were conducted with type 304L stainless steel and type 304 stainless steel alloyed with 4% C. The composition of these is given in Table 1. Slag of the composition of Table 2 was added to the steel. The melt size was 5 kg with 500 g of added slag. During the process, pin samples were taken periodically with 3 mm I.D. quartz tubes. The induction supply was momentarily set at a maximum power during sampling, in order to expose an area of slag-free, convex melt surface. Taking samples from this area minimized contamination of the pins.

TABLE 1

| STEEL COMPOSITION | | | | | | | | | | | |
|---|---|---|---|---|---|---|---|---|---|---|---|
| Steel Type | Elements | | | | | | | | | | |
| | Cr | Ni | Mn | Si | P | Al | Mo | Cu | Sn | C | Fe |
| Type 304L stainless steel | 18.5 | 10.1 | 1.11 | .36 | .028 | .02 | .22 | .20 | .01 | .027 | Balance |
| Type 304-4% C stainless steel | 17.7 | 9.7 | 1.07 | .35 | .028 | .02 | .21 | .19 | .01 | 4.0 | Balance |

TABLE 2

| SLAG COMPOSITION | | | | | | |
|---|---|---|---|---|---|---|
| CaO | $Al_2O_3$ | MgO | FeO | $P_2O_5$ | $SiO_2$ | S |
| 46.6 | 46.6 | 1.9 | 0.9 | .34 | 3.4 | .22 |

With type 304L stainless steel, the electrode polarity was negative for the first 73 minutes of application, then positive for the duration of the experiment. The temperature was 1450°C. As can be seen in Figure 2, the equilibrium sulphur level was reduced from 180 ppm to 30 ppm upon switching the electrode polarity to positive. Thus the use of a positive polarity electrode increased the equilibrium sulphur removal from the steel by a significant amount.

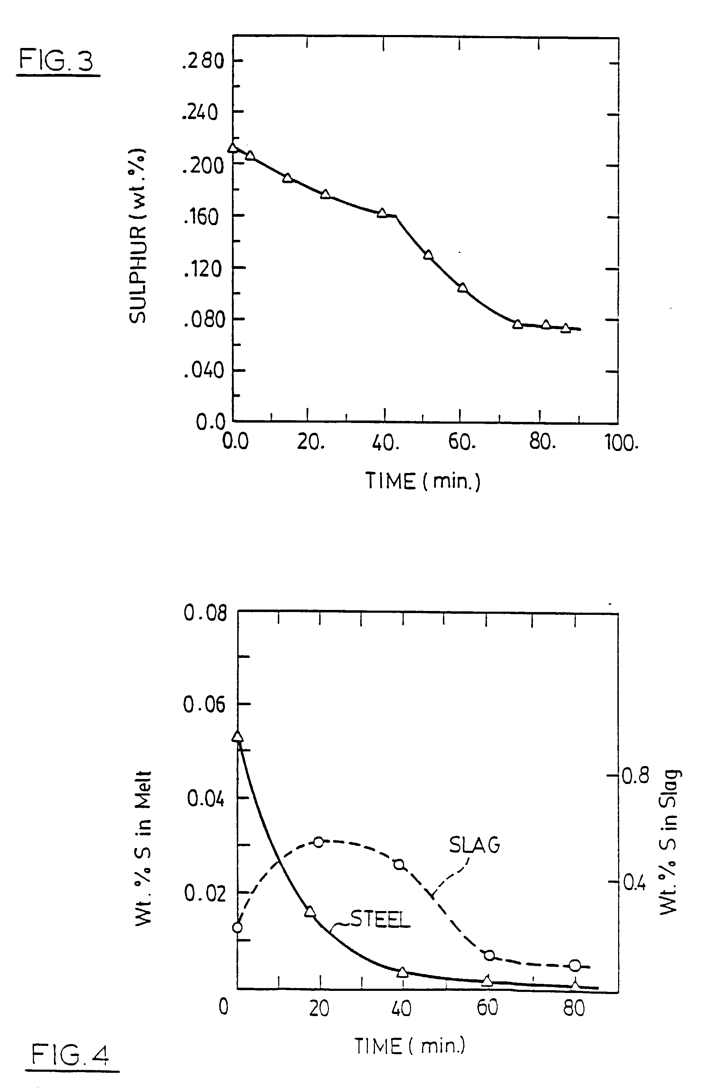

Type 304 stainless steel alloyed with 4% C was then tested under the same conditions. For the first 42 minutes, a negative polarity was applied and from 42-75 minutes after starting, a positive polarity was applied. From 75 minutes on, a negative polarity was re-applied. As can be seen in Figure 3, the drop in sulphur content of the liquid metal is dramatically increased when a positive polarity is applied.

Finally, the extent of sulphur removal was examined and is shown in Figure 4. After 80 minutes, the sulphur content of the steel is reduced to zero. The sulphur content of the slag is also reduced to less than 0.01 wt % after 80 minutes.

EXAMPLE 2

The apparatus of Example 1, 5 kg of 304L stainless steel and 500 g of the slag of Example 1 (see Table 2) were used. The slag and metal were maintained at an average temperature of 1480°C and a 5.5 kw positive polarity D.C. plasma was applied to the slag surface. After 140 minutes of treatment, the slag composition was determined and is denoted as A in the following table:

| Slag | CaO | $Al_2O_3$ | MgO | $Cr_2O_3$ | FeO | MnO | $SiO_3$ | S |
|---|---|---|---|---|---|---|---|---|
| A | 44.1 | 43.8 | 9.10 | 0.50 | 0.25 | 0.20 | 1.87 | 0.56 |
| B | 41.1 | 40.3 | 5.10 | 5.35 | 1.47 | 2.78 | 3.36 | 0.97 |
| C | 42.5 | 42.0 | 8.10 | 2.25 | 1.14 | 0.99 | 2.52 | 0.73 |

The polarity of the plasma was then reversed to negative, and a further treatment of 135 minutes was carried out in this fashion. The resulting slag composition was determined and is represented by B. The increase of the oxides of iron, manganese, silicon and chromium were noted, presumably oxidized from the melt. The polarity was again reversed, so the applied plasma was positive. After a further treatment of 65 minutes, the composition of the slag was determined and is denoted by C. The decrease of the fraction of reducible oxides was observed, notably oxides of iron, manganese, silicon and chromium. The metallic components of the oxides were alloyed into the steel by reduction at the slag/metal interface.

EXAMPLE 3

The apparatus of Example 1 is used, and 5 kg of 304L stainless steel and 500 g of slag of the above composition (see Table 2) are used. 30 g of chromium oxide is added to the slag. The slag is maintained at a temperature of 1480°C and a positive polarity of 10 kW DC plasma is applied to the slag surface. The chromium dioxide migrates towards and is reduced to chromium at the interface between the slag layer and the molten steel and migrates into the molten steel to alloy the steel.

EXAMPLE 4

The apparatus of Example 1 is used, and 2 kg of iron are used with 500 g of the slag of the above composition (see Table 2). The slag and metal are maintained at an average temperature of 1550°C and a negative polarity of 10 kw D.C. plasma is applied to the slag surface. 5 kg of an ore containing 30% NiO and 40% $Cr_2O_3$ is added to the slag with enough carbon to reduce the NiO. The amount of carbon used should be such that i) significant amounts of the carbon are not solubilized in the metal and ii) reduction of $Cr_2O_3$ does not occur. After sufficient treatment time, the metal and slag phases are removed. The metal phase is now ferronickel, and the slag phase contains $Cr_2O_3$. A further 2 kg of iron are melted in the furnace and the slag phase previously removed is added back into the furnace. An average temperature of 1550°C is maintained and a positive polarity of 10 kw D.C. plasma is applied to the slag surface. Although not essential, the addition of some reductant such as carbon can hasten the reduction of $Cr_2O_3$ from the slag phase, but carbon is not added in an amount sufficient to carbonize the metal excessively. A low carbon ferrochromium product can thus be obtained. This sequential reduction procedure can thus produce low carbon ferro-nickel and low carbon ferro-chromium from the same ore in two steps.

EXAMPLE 5

The apparatus of Example 1 is used. An iron carbon alloy is melted in the furnace and waste oxides comprising AOD dust, electric furnace baghouse dust or similar wastes are added continuously or intermittently to form a slag phase. 10 kw of positive polarity D.C. plasma is then applied to the slag phase. The oxides of iron, manganese, chromium and nickel are reduced and the elements alloyed to the metal. The metal phase accumulates as the reaction proceeds. The slag phase is fumed of volatile impurities such as zinc, lead, cadmium and their oxides. The resulting slag is non-toxic, non-leachable, and can be buried as landfill. The resulting metal can be recycled to recover valuable metallic units. The resulting fumes are collected in a fume system and disposed of appropriately as is known in the art.

EXAMPLE 6

The apparatus of Example 1 is used. A copper or copper alloy melt is used as the metal and a basic oxide slag containing calcium fluoride is used as the ionic melt layer. Some calcium may be present in the slag as dissolved metallic calcium. A 10 kw positive polarity D.C. plasma is applied to the surface of the slag layer. Group V impurities such as Bi, As, Sb are reduced at the slag/metal interface, and combined with metallic or ionic calcium to form components such as $Ca_3As_2$ or ionic forms of these compounds. This is aided by the polarization of the slag due to the applied D.C. polarity.

EXAMPLE 7

The apparatus of Example 1 is used. An impure nickel melted from scrap nickel sources, such as used catalysts, is used with an ionic melt layer comprising oxides. Purification to remove oxygen and sulphur is carried out as in Example 1 for steel.

**Claims**

1. A process for desulphurizing a metal in a furnace assembly comprising: a <u>sealed</u> container for receiving a liquid metal melt which contains sulphur impurities; <u>and a means to introduce oxygen, the process including</u> (which includes) the steps of:

   (a) providing the liquid metal melt in the container such that the liquid metal melt contacts a cathode;

   (b) forming an ionic melt layer on the surface of the liquid metal melt;

(c) disposing an anode above the ionic melt layer, the anode comprising an axial bore extending therethrough;

(d) applying a positive DC potential to the liquid metal melt;

(e) maintaining the ionic melt layer as a liquid while it is on the surface of the liquid metal melt;

(f) introducing a gas, through the axial bore in the anode, into the region above the ionic melt layer to generate and stabilize a plasma, to induce a flow of electrons from the liquid metal melt through the ionic melt layer toward the plasma phase resulting in reduction of the sulphur impurities in the liquid metal melt which migrate from the liquid metal to the interface between the ionic melt layer and the plasma phase; and

(g) introducing oxygen to the plasma phase to enhance removal of the sulphur impurities from the interface between the ionic melt layer and the plasma phase.

2. A process as claimed in claim 1, in which the ionic melt layer comprises a slag compound.

3. A process as claimed in claim 2, in which the slag compound comprises oxides.

4. A process as claimed in claim 3, in which the slag compound further comprises a Group VII salt.

5. A process as claimed in claim 4, in which the salt is a fluoride salt.

6. A process as claimed in claim 1, in which the metal has a melting point of above about 800°C.

7. A process as claimed in claim 1, in which the metal has melting point of above about 1100°C.

8. A process as claimed in claim 1, in which the metal is selected from the group comprising steel, copper, iron, titanium, silicon, nickel and alloys thereof.

9. A process as claimed in claim 1, in which the ionic melt layer is provided in an amount sufficient to cover the entire surface of the liquid metal completely.

10. A process as claimed in claim 1, in which the metal oxides present in the ionic melt are oxides of metals selected from the group comprising chromium, nickel, cobalt, manganese, silicon, niobium, titanium, vanadium, molybdenum and tungsten.

11. A process as claimed in claim 1, in which waste oxides selected from mill scale, flyash, baghouse dust and AOD dust are added to the ionic melt layer.

12. A process as claimed in claim 1, in which the liquid metal comprises a ferroalloy.

13. A process as claimed in claim 12, in which the ferroalloy comprises a metal selected from the group comprising vanadium, chromium, nickel, cobalt, manganese, silicon, niobium, titanium, molybdenum and tungsten.

14. A process as claimed in claim 1, in which current density in the vicinity of the electrode is sufficiently high to create the plasma phase.

15. A process as claimed in claim 1, in which the current has an average current density of at least 0.7 amps.cm$^{-2}$.

16. A process as claimed in claim 15, in which the average current density is about 1 to 1.2 amps.cm$^{-2}$.


**Patentansprüche**

1. Verfahren zur Entschwefelung von Metall in einer Ofenanordnung, welche einen abgedichteten Behälter, welcher eine flüssige Metallschmelze aufnehmen kann, die Schwefel-Verunreinigungen enthält, und Mittel umfaßt, mit welchen Sauerstoff eingeleitet werden kann, wobei das verfahren die Schritte umfaßt:

a) Bereitstellen der flüssigen Metallschmelze in dem Behälter in einer Weise, daß die flüssige Metallschmelze mit einer Kathode in Berührung ist;

b) Ausbilden einer Ionenschicht der Schmelze an der Oberfläche der flüssigen Metallschmelze;

c) Anordnen einer Anode oberhalb der Ionenschicht der Schmelze, wobei die Anode eine axiale durch sie hindurchgehende Bohrung aufweist;

d) Anlegen eines positiven Gleichstrompotentials an die flüssige Metallschmelze;

e) Erhalten der Ionenschicht der Schmelze als Flüssigkeit, während sie an der Oberfläche der flüssigen Metallschmelze ist;

f) Einleiten eines Gases durch die axiale Bohrung in der Anode in den Bereich oberhalb der Ionenschicht der Schmelze, wodurch ein Plasma erzeugt und stabilisiert wird, so daß ein Elektronenstrom von der flüssigen Metallschmelze durch die Ionenschichder Schmelze hindurch zur Plasma-Phase hin induziert wird, was zur Folge hat, daß die Schwefel-Verunreinigungen in der flüssigen Metallschmelze reduziert werden, die von dem flüssigen Metall zur Grenzschicht zwischen der Ionenschicht der Schmelze und der Plasma-Phase wandern; und

g) Einleiten von Sauerstoff in die Plasma-Phase, um die Entfernung der Schwefel-Verunreinigungen aus der Grenzschicht zwischen der Ionenschicht der Schmelze und der Plasma-Phase zu fördern.

2. Verfahren nach Anspruch 1, bei welchem die Ionenschicht der Schmelze eine Schlacken-Verbindung umfaßt.

3. Verfahren nach Anspruch 2, bei welchem die Schlakkenverbindung Oxide umfaßt.

4. Verfahren nach Anspruch 3, bei welchem die Schlacken-verbindung ferner ein Salz der Gruppe-VII umfaßt.

5. Verfahren nach Anspruch 4, bei welchem das Salz ein Fluoridsalz ist.

6. Verfahren nach Anspruch 1, bei welchem das Metall einen Schmelzpunkt aufweist, welcher oberhalb von ungefähr 800°C liegt.

7. Verfahren nach Anspruch 1, bei welchem das Metall einen Schmelzpunkt aufweist, welcher oberhalb von ungefähr 1100°C liegt.

8. Verfahren nach Anspruch 1, bei welchem das Metall aus der Gruppe ausgewählt ist, welche Stahl, Kupfer, Eisen, Titan, Silizium, Nickel und deren Legierungen umfaßt.

9. Verfahren nach Anspruch 1, bei welchem die Ionenschicht der Schmelze in einer solchen Menge vorliegt, daß sie die gesamte Oberfläche des flüssigen Metalls vollständig bedeckt.

10. Verfahren nach Anspruch 1, bei welchem die Metalloxide, welche in der Ionenschmelze vorliegen, aus der Gruppe ausgewählt sind, welche Chrom, Nickel, Kobalt, Mangan, Silizium, Niob, Titan, Vanadium, Molybdän und Wolfram umfaßt.

11. Verfahren nach Anspruch 1, bei welchem Abfalloxide der Ionenschicht der Schmelze beigegeben werden, wobei die Abfalloxide aus der Gruppe ausgewählt sind, welche Walzzunder, Flugasche, Filterkastenstaub und "AOD-Staub" umfaßt.

12. Verfahren nach Anspruch 1, bei welchem das flüssige Metall eine Eisenlegierung umfaßt.

13. Verfahren nach Anspruch 12, bei welchem die Eisenlegierung ein Metall umfaßt, welches aus der Gruppe ausgewählt ist, welche Vanadium, Chrom, Nickel, Kobalt, Mangan, Silizium, Niob, Titan, Molybdän und Wolfram umfaßt.

14. Verfahren nach Anspruch 1, bei welchem die Stromdichte in der Nähe der Elektrode so hoch ist, daß hierdurch die Plasma-Phase erzeugt wird.

**15.** Verfahren nach Anspruch 1, bei welchem der Strom Eine mittlere Stromdichte von mindestens 0,7 A/cm$^2$ aufweist.

**16.** Verfahren nach Anspruch 15, bei welchem die mittlere Stromdichte ungefähr 1 bis 1,2 A/cm$^2$ beträgt.

**Revendications**

**1.** Procédé de désulfuration d'un métal dans un assemblage de four comprenant : un conteneur <u>hermétique</u> permettant de recevoir un métal liquide fondu qui contient des impuretés de soufre ; et des moyens pour introduire de l'oxygène, le procédé comprenant (lequel comprend) les étapes consistant à :

(a) amener le métal liquide fondu dans le conteneur de telle sorte que le métal liquide fondu soit en contact avec une cathode ;
b) former une couche de matière fondue ionique sur la surface du métal liquide fondu ;
c) disposer une anode au-dessus de la couche de matière fondue ionique, anode à travers laquelle s'étend un alésage axial ;
d) appliquer un potentiel continu positif au métal liquide fondu ;
e) maintenir la couche de matière fondue ionique sous la forme d'un liquide pendant qu'elle est sur la surface du métal liquide fondu ;
f) introduire un gaz par l'alésage axial de l'anode dans la zone située au-dessus de la couche de matière fondue ionique afin de générer et de stabiliser un plasma, afin d'induire un flux d'électrons entre le métal liquide fondu et la phase de plasma en passant par la couche de matière fondue ionique, ce qui permet de réduire les impuretés de soufre dans le métal liquide fondu qui migrent du métal liquide vers l'interface située entre la couche de matière fondue ionique et la phase de plasma ; et
g) introduire de l'oxygène dans la phase de plasma afin d'améliorer le retrait des impuretés de soufre de l'interface entre la couche de matière fondue ionique et la phase de plasma.

**2.** Procédé selon la revendication 1, dans lequel la couche de matière fondue ionique comprend un laitier.

**3.** Procédé selon la revendication 2, dans lequel le laitier comprend des oxydes.

**4.** Procédé selon la revendication 3, dans lequel le laitier comprend en outre un sel du groupe VII.

**5.** Procédé selon la revendication 4, dans lequel le sel est un sel de fluorure.

**6.** Procédé selon la revendication 1, dans lequel le métal présente un point de fusion supérieur à 800°C environ.

**7.** Procédé selon la revendication 1, dans lequel le métal présente un point de fusion supérieur à 1100°C environ.

**8.** Procédé selon la revendication 1, dans lequel le métal est choisi dans le groupe comprenant l'acier, le cuivre, le fer, le titane, le silicium, le nickel et des alliages de ceux-ci.

**9.** Procédé selon la revendication 1, dans lequel la couche de matière fondue ionique est prévue en une quantité suffisante pour recouvrir entièrement la totalité de la surface du métal liquide.

**10.** Procédé selon la revendication 1, dans lequel les oxydes de métal présents dans la matière fondue ionique sont des oxydes de métaux choisis dans le groupe comprenant le chrome, le nickel, le cobalt, le manganèse, le silicium, le niobium, le titane, le vanadium, le molybdène et le tungstène.

**11.** Procédé selon la revendication 1, dans lequel les oxydes usés choisis parmi les scories de laminoir, les cendres volantes, la poussière de chambre de filtration et la poussière AOD sont ajoutés dans la couche de matière fondue ionique.

**12.** Procédé selon la revendication 1, dans lequel le métal liquide comprend un ferro-alliage.

**13.** Procédé selon la revendication 12, dans lequel le ferro-alliage comprend un métal choisi dans le groupe comprenant le vanadium, le chrome, le nickel, le cobalt, le manganèse, le silicium, le niobium, le titane, le molybdène et le tungstène.

**14.** Procédé selon la revendication 1, dans lequel la densité de courant à proximité de l'électrode est suffisamment élevée pour créer la phase de plasma.

**15.** Procédé selon la revendication 1, dans lequel le courant présente une densité de courant moyenne d'au moins 0,7 A.cm$^{-2}$.

**16.** Procédé selon la revendication 15, dans lequel la densité de courant moyenne est d'environ 1 à 1,2 A.cm$^{-2}$.

FIG.1

FIG.2

FIG. 3

FIG. 4